(19) Europäisches Patentamt
European Patent Office
Office européen des brevets

(11) **EP 1 852 956 A1**

(12) **EUROPÄISCHE PATENTANMELDUNG**

(43) Veröffentlichungstag:
**07.11.2007 Patentblatt 2007/45**

(51) Int Cl.:
***H02K 3/24*** *(2006.01)*

(21) Anmeldenummer: 06009309.3

(22) Anmeldetag: **05.05.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **Klinger, Friedrich, Prof. Dr.-Ing.**
**66119 Saarbrücken (DE)**

(72) Erfinder: **Klinger, Friedrich, Prof. Dr.-Ing.**
**66119 Saarbrücken (DE)**

(74) Vertreter: **Wieske, Thilo et al**
**Patentanwaltskanzlei**
**Vièl & Wieske**
**Feldmannstrasse 110**
**66119 Saarbrücken (DE)**

(54) **Verfahren zur Kühlung der Wicklungen elektrischer Maschinen**

(57)     Die vorliegende Erfindung betrifft ein Verfahren zur Kühlung der Wicklung elektrischer Maschinen durch ein Fluid, das direkt durch Kühlkanäle in den elektrischen Leitern der Wicklung oder indirekt in Kanälen geführt wird, die in engem Wärmekontakt mit den elektrischen Leitern stehen, wobei das Fluid ein Kältemittel, insbesondere $CO_2$ ist, das durch Wärmeaufnahme mit Phasenwechsel bzw. oberhalb des kritischen Punktes mit hoher Enthalpiedifferenz bei kleiner Temperaturerhöhung den Abtransport der Verlustwärme der elektrischen Maschine übernimmt.

**Figur 1**

EP 1 852 956 A1

## Beschreibung

Die Erfindung betrifft ein Verfahren zur Kühlung der Wicklungen elektrischer Maschinen.

Bei der Weiterentwicklung elektrischer Maschinen steht oft die Reduzierung der Verluste im Vordergrund, um cinc Wirkungsgradverbesserung und damit eine Einsparung an elektrischer Energie zu erreichen.

Noch häufiger wird eine Steigerung der Leistungsdichte angestrebt, um den Bauraum, das Gewicht oder die Kosten von Motoren oder Generatoren zu reduzieren. Wenn diese Maschinen nur kurzzeitig eingesetzt werden, dann spielt der Wirkungsgrad keine besondere Rolle. Mit der Leistungsdichte aber steigen die Verluste an, so dass effektivere Kühlsysteme erforderlich werden, die diese Verluste abführen können.

Die Leistungsdichte elektrischer Maschinen wird häufig mittels einer Kennzahl, dem Drehschub τ, angegeben. Darunter versteht man das Verhältnis aus Umfangskraft $F_{11}$ und Mantelfläche $A_M$ im Luftspalt :

$$\tau = F_U \, / \, A_M = 2M \, / \, D^2 \pi L_P$$

mit dem Drehmoment M, dem Luftspaltdurchmesser D und der Länge des Blechpaketes $L_P$.

Die Werte für den Drehschub von kleinen außengekühlten Drehstrommotoren liegen bei $\tau$ = 18 bis 25 kN/m², bei Bahnmotorcn werden 40 bis 60 kN/m² erreicht.

Eine Übersicht über mögliche Arten der Kühlung von Grenzleistungs-Turbogeneratoren bis 2000 MVA ist z. B. in dem Lehrbuch Elektrische Maschinen von Rolf Fischer, Carl Hanser Verlag, München, Wien, in der 10. Auflage, Seite 340 gegeben. Dort wird auch die direkte Leiterkühlung beschrieben mit Hohlleitem durch die Luft, Wasserstoffgas oder Wasser als Kühlmedium gepumpt wird.

Aus der DE 102 53 699 A1 ist ein Kühlsystem für größere Maschinen bekannt, bei dem axiale Kühlkanäle in unmittelbarer Nähe zur Statorwicklung vorgesehen sind, die mit radialen Kühlschlitzen im Blechpaket so kombiniert werden, dass eine gleichmäßige Durchströmung des Blechpaketes mit Kühlluft zur Abkühlung der Wicklung möglich ist.

Aus der DE 196 21 058 A1 ist eine direkte Leiterkühlung bekannt, die im luftgekühlten Läufer von Turbogeneratoren mittlerer bis großer Leistung einsetzbar ist. Dabei werden die Kühlkanäle durch Nuten in benachbarten Leitern gebildet.

In der DE 102 44 202 A1 wird ebenfalls ein in axialer Richtung verlaufender Kühlkanal für cin gasförmiges Kühlmedium beschrieben, der als hohles Abstandselement zwischen zwei Teilwicklungen angeordnet ist und gleichzeitig die Funktion einer Spannfeder übernimmt. Durch Öffnungen in den Abstandselementen wird das Kühlgas in radiale Schlitze geleitet, die durch entsprechende Abstandsprofile im Blechpaket entstehen.

Die Verwendung von Wasser als Kühlmedium ist bei Grenzleistungs -Turbogeneratoren verbreitet, da Wasser wegen seiner hohen spezifischen Wärme die höchste Wärmetransportleistung ermöglicht in Verbindung mit Hohlleitern, die direkt von Wasser durchströmt werden. Dies ist jedoch mit großen Nachteilen verbunden, so dass die direkte Leiterkühlung außer bei Grenzleistungs-Turbogeneratoren keine Anwendung findet.

So entstehen Temperaturunterschiede in der Wicklung aufgrund der stetig ansteigenden Temperatur des Wassers entlang des Kühlweges, die auch zu mechanischen Beanspruchungen führen. Um den Temperaturanstieg zwischen Ein- und Austritt des Kühlwassers zu begrenzen, muss der Massenstrom des Wassers groß gewählt werden. Dementsprechend werden groß dimensionierte Kühlkanalquerschnitte gebraucht Damit wird aber der wirksame Leiterquerschnitt in der Nut verringert und die Stromdichte zu Ungunsten des Wirkungsgrades erhöht. Der Aufwand für die Wasseraufbereitung ist beträchtlich, wie aus der DE 600 09 170 T2 oder der DE 197 31 852 A1 hervorgeht. Die Wirtschaftlichkeitsgrenze für direkte Leiterkühlung mit Wasser liegt oberhalb von 500 MW.

Bei direkter Leiterkühlung mit Wasserstoffgas sind die Probleme ähnlich. Zusätzlich führen radiale Kühlschlitze zu einer Verlängerung des Blechpaketes und der Leiter um etwa 10%, ohne dass eine Drehmomentsteigerung damit verbunden wäre. Die Wirtschaftlichkeitsgrenze für direkte Leiterkühlung mit Wasserstoffgas liegt oberhalb von 100 MW.

Eine erhebliche Erhöhung des eingangs erläuterten Drehschubes und damit der Leistungsdichte ist das Ziel der vorliegenden Erfindung.

Dazu wird ein sehr effektives Verfahren zum Kühlen der Wicklung vorgeschlagen. Damit wird es möglich, weit größere Wärmemengen aus den Leitern der Wicklung abzuführen, als mit bisher verwendeten, bekannten Kühlsystemen.

Der Erfindung liegt die Aufgabe zu Grunde, eine erhebliche Steigerung der Kühlleistung von elektrischen Maschinen insbesondere im Leistungsbereich von etwa 0,1 bis 100 MW zu ermöglichen.

Diese Aufgabe wird nach der vorliegenden Erfindung durch ein Verfahren gemäß Anspruch 1 gelöst, indem zur Kühlung der Wicklung elektrischer Maschinen ein Fluid verwendet wird, das direkt durch Kühlkanäle in den elektrischen Leitern der Wicklung oder indirekt in Kanälen geführt wird, die in engem Wärmekontakt mit den elektrischen Leitern stehen, wobei das Fluid ein Kältemittel, insbesondere $CO_2$ ist, das durch Wärmeaufnahme mit Phasenwechsel bzw. oberhalb des kritischen Punktes mit hoher Enthalpiedifferenz bei kleiner Temperaturerhöhung den Abtransport der Verlustwärme der elektrischen Maschine übernimmt.

Dabei zeigt sich vorteilhaft, dass entlang den Leitern eine weitgehend gleichmäßige Temperatur gehalten werden kann, wobei gleichzeitig eine gute Wärmeaufnahme gegeben ist. Diese gleichmäßige Temperatur entlang des Leiters ergibt sich insbesondere im Vergleich zu einem Kühlmedium, das einen Wärmeabtransport durch eine Temperaturerhöhung bewirkt. Hier stellt sich ein Temperaturgradient in Fließrichtung ein.

Bei der Ausgestaltung nach Anspruch 2 wird das Fluid in einem geschlossenen und druckdichten Kreislauf umgepumpt.

Dadurch lässt sich die Temperatur der elektrischen Leiter über eine Veränderung des Massestroms und der Temperatur des Fluids beeinflussen.

Bei der Ausgestaltung nach Anspruch 3 nimmt das Fluid die Verlustwärme in den Kühlkanälen durch Verdampfung zweiphasig oder überkritisch einphasig bei nahezu konstanter Leitertemperatur auf. Die Verlustwärme wird in einem Wärmeübertrager direkt an die Umgebung oder indirekt an einen Kühlkreislauf mit einer Kompressor- oder Absorptionskältemaschine abgegeben. Bei Verwendung einer Kompressor- oder Absorptionskältemaschine wird das Fluid dort unter die Umgebungstemperatur abgekühlt und kondensiert.

Bei der Ausgestaltung nach Anspruch 4 wird das flüssige Fluid in die Kühlkanäle der Wicklung gepumpt und durch die Aufnahme der Verlustwärme teilweise oder auch weitgehend verdampft oder überhitzt, wobei das Fluid dann in einen Abscheider gelangt, in dem die Phasen getrennt werden, wobei das dampfförmige Fluid im Kompressor einer Kältemaschine komprimiert wird und durch Abgabe der Wärme an die Umgebung kondensiert.

Bei der Ausgestaltung nach Anspruch 5 erfolgt die Förderung des Kühlmittels nicht durch eine separate Pumpe. Dies wird vom Kältekreislauf mit übernommen, wobei flüssiges Kühlmittel, welches von den Kühlkanälen zurückkommt, in einem Wärmeübertrager vom Kondensat des Kältekreislaufes verdampft wird.

Vorteilhaft wird dann nur dampfförmiges Kältemittel vom Kompressor des Kältekreislaufes angesaugt.

Bei der Ausgestaltung nach Anspruch 6 kann das Kühlmittel die Verlustwärme wahlweise über einen Wärmetauscher direkt an die Umgebung abgeben, oder es kann mit einer Kältemaschine unter die Umgebungstemperatur gekühlt werden.

Bei der Ausgestaltung nach Anspruch 7 werden die Temperaturen der Leiter des Ständers und des Läufers an die Umgebungstemperaturen angepasst.

Vorteilhaft kann dadurch das Auftreten von Wärmespannungen und Verformungen der Ständerund Läuferstrukturen vermindert oder auch zumindest annähernd vermieden werden.

Bei der Ausgestaltung nach Anspruch 8 wird die Temperatur von Ständer und Läufer auf einen einstellbaren festen Abstand oberhalb oder unterhalb der Umgebungstemperatur geregelt.

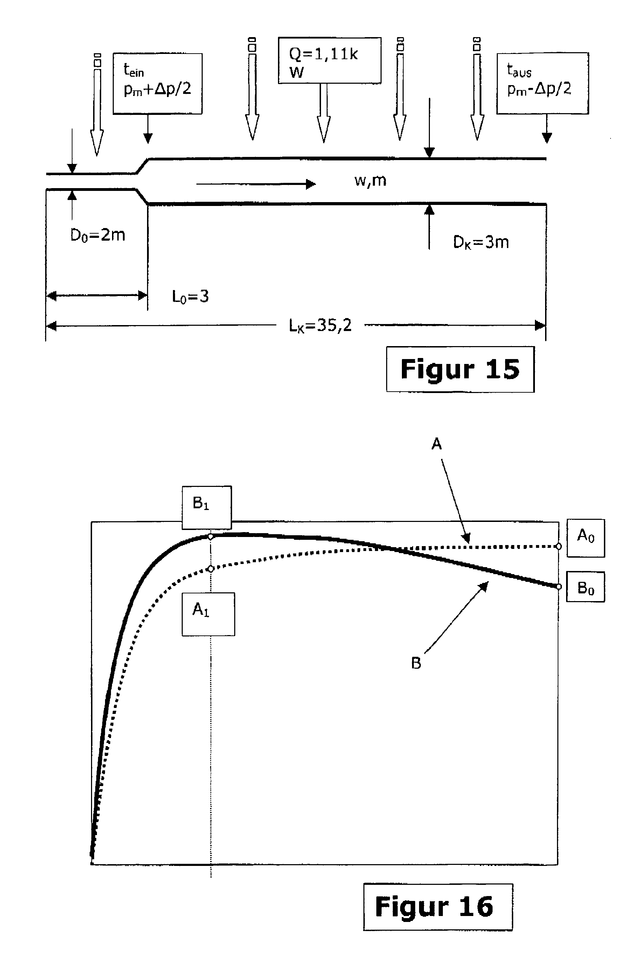

Bei der Ausgestaltung nach Anspruch 9 wird die elektrische Maschine so ausgelegt, dass durch Erhöhung der Leistungsdichte das Optimum des Wirkungsgrades einer elektrischen Maschine in ein der jeweiligen Nutzungshäufigkeit angepasstes Teillastgebiet verlegt wird (Figur 16).

Vorteilhaft kann dadurch der Bauaufwand deutlich reduziert werden, wenn in dem weniger häufig vorkommenden Volllastbereich geringere Wirkungsgrade akzeptiert werden können.

Bei der Ausgestaltung des Verfahrens nach Anspruch 10 wird eine weitgehend gleichmäßige Verteilung des Fluids auf parallele verlaufende Kühlkanäle dadurch erreicht, dass die Kühlkanäle mit einer Einlaufstrecke versehen sind, die einen kleineren Kanalquerschnitt aufweist,

Vorteilhaft entsteht durch diese Maßnahme in dieser Einlaufstrecke ein auf die Länge bezogener erhöhter Druckverlust.

Insgesamt, ist es bei den vorstehend beschriebenen Ausführungsformen vorteilhaft, die Querschnittsflächen und Längen der Kühlkanäle so zu wählen, dass ein optimaler Druckabfall des Kühlmediums bei minimaler Reduzierung der metallischen Leiterquerschnittsflächen möglich wird.

Entsprechend nachfolgenden Erläuterungen lassen sich die Widerstände der elektrischen Leiter und damit die Ohmschen Verluste durch Kühlung soweit reduziert (Gleichung 3), dass die Stromdichte, und damit der Drehschub und die Leistungsdichte erheblich vergrößert werden können (Gleichung 4).

Im Vergleich zum Stand der Technik ergibt sich aus diesen Maßnahmen vorteilhaft gegenüber den bekannten, meist luftgekühlten Maschinen, dass

- die Leitertemperaturen erheblich abgesenkt werden können,
- die Leiterwiderstände damit wesentlich geringer werden,
- eine bedeutende Anhebung des Drehschubes $\tau$ möglich wird,
- die dabei nur wenig ansteigende Verlustleistung sicher abgeführt werden kann,
- die Luftspaltinduktion bei Maschinen mit Permanentmagneterregung leicht ansteigt,
- insgesamt die Leistungsdichte erheblich gesteigert werden kann und
- die Lebensdauer des Wicklungssystems erhöht wird, weil thermische und mechanische Beanspruchungen spürbar reduziert werden.

Im Folgenden werden mittels bekannter Zusammenhänge die Auswirkungen des erlindungsgemäßen Kühlverfahrens im Vergleich erläutert.

Das Drehmoment einer elektrodynamischen Maschine kann mit Hilfe der folgenden Beziehung dargestellt werden:

$$M = V_{LU}\ B\ A \cos\varphi = \frac{1}{4} B\ D\ L_P\ A_L\ n_L\ S_L \cos\varphi \quad (1)$$

Darin

| | | | |
|---|---|---|---|
| M | Drehmoment der Maschine in Nm | | |
| $V_{LU}$ | Luftspaltvolumen $V_{LU} = D^2\pi\, L_p / 4$ | | $m^3$ |
| D | Luftspaltdurchmesser | | m |
| $L_p$ | Blechpaketlänge | | m |
| A | Strombelag $A = \dfrac{n_L\, I_L}{D\pi} = \dfrac{n_L\, A_L\, S_L}{D\pi}$ | | A/m |
| $I_L$ | Leiterstrom | | A |
| $n_L$ | Zahl der Leiter | | |
| $A_L$ | Lciterquerschnittsflächc | | $m^2$ |
| $S_L$ | Stromdichte $S_L = I_L / A_L$ | | $A/m^2$ |
| B | Luftspaltinduktion Tesla = | | $Vs/m^2$ |
| $\cos\varphi$ | Leistungsfaktor | | |

Die Ohmschen Verluste $P_v$ in der Wicklung sind dem Quadrat des Leiterstroms $I_L$, der Zahl $n_L$ der Leiter in der Wicklung und dem Ohmschen Widerstand der Wicklung proportional:

$$P_V = n_L\, I_L^2\, R_L = n_L\, I_L^2\, \rho_0 \big[1 + \alpha(T - T_0)\big] \frac{L_L}{A_L} = n_L\, A_L\, S_L^2\, \rho_0 \big[1 + \alpha(T - T_0)\big] L_L \quad (2)$$

Darin:

$R_L$ Wicklungswiderstand in $\Omega$
$\rho_0$ spezifischer Widerstand für Kupfer $\rho_0 = 1/56\ \Omega\ mm^2/m$
$\alpha$ Tempcraturkoeffizient für Kupfer $\alpha = 0{,}0039\ 1/K$
T Leitertemperatur in °C
$T_0$ Bezugstemperatur $T_0 = 20°C$
$L_L$ Leiterlänge in m
Lw Wickelkopflänge in m
x Verhältnis Wickelkopf zu Polteilung z. B. 2 bis 3
2p Polpaarzahl
$A_L$ Leiterquerschnitt in $m^2$

Aus Gleichung (1) kann die Stromdichte $S_1$ ermittelt und in Gleichung (2) eingesetzt werden.

$$P_V = \frac{16\, M^2\, \rho_0 \big[1 + \alpha(T - T_0)\big] L_L}{B^2\, D^2\, L_P^2\, n_L\, A_L \cos^2\varphi} \quad (3)$$

Wenn eine Erhöhung der Stromdichte soweit möglich wäre, dass das Drehmoment ohne Vergrößerung der Maschinenabmessungen verdoppelt würde, so stiegen die Ohmschen Verluste um den Faktor 4, wie aus Gleichung (3) erkennbar ist, wenn alle anderen Maschinendaten unverändert blieben.

Bildet man das Verhältnis der Verlustleistungen $P_{V2}/P_{V1}$ zweier beliebiger elektrischer Maschinen so erhält man:

$$\frac{P_{V2}}{P_{V1}} = \frac{16}{16}\left(\frac{M_2}{M_1}\right)^2\left(\frac{D_1}{D_2}\right)^2\left(\frac{B_1}{B_2}\right)^2\left(\frac{L_{P1}}{L_{P2}}\right)^2\frac{A_{L1}}{A_{L2}}\frac{n_{L1}}{n_{L2}}\frac{\rho_{02}}{\rho_{01}}\frac{L_{L2}}{L_{L1}}\frac{[1+\alpha(T_2-T_0)]}{[1+\alpha(T_1-T_0)]}\frac{\cos^2\varphi_2}{\cos^2\varphi_1} \quad (4)$$

Mit diesen Beziehungen lässt sich ein Vergleich anstellen zwischen einer vorhandenen Maschine 1, z. B. einer Synchronmaschine mit einer Erregung durch Permanentmagnete, deren Abmessungen und Betriebsdaten bekannt sind, und einer neuen direkt in den Leitern gekühlten Maschine 2, die bei gleichen Abmessungen die doppelte Leistungsdichte erreichen soll.

Folgende Daten ändern. sich:

- Das Drehmoment soll doppelt so hoch sein, $M_2=2M_1$
- Bei gleicher Nutöffnung verringert sich der Leiterquerschnitt um den Kühlkanalquerschnitt, z. B. $A_{L2}=A_{L1}/1,05$.
- Die Leitertemperatur wird durch verdampfendes $CO_2$ von $T_1=120°C$ auf z. B. $Y_2= -50°C$ herabgekühlt.
- Die Luftspaltinduktion erhöht sich durch die tiefere Temperatur der Permanentmagnete um etwa 12%: $B_2=1,12B_1$

$$\left(\frac{M_2}{M_1}\right) = 2 \quad \left(\frac{B_2}{B_1}\right) = 1,12 \quad \left(\frac{A_{L1}}{A_{L2}}\right) = 1,05 \quad \text{und } T_2=-50°C, T_1=120°C \quad (5)$$

Die restlichen Brüche habe den Wert 1, da die Durchmesser D, die Paketlängen $L_p$, die Zahlen der Leiter $n_L$, die Längen der Leiter $L_L$ und die Leistungsfaktoren $\cos\varphi$ nicht geändert wurden.

Gleichung (5) eingesetzt in Gleichung (4) ergibt:

$$\left(\frac{P_{V2}}{P_{V1}}\right) = 2^2 * 1^2 * \left(\frac{1}{1,12}\right)^2 * 1^2 * 1,05 * 1 * 1 * 1 * \frac{[1+0,0039(-50-20)]}{[1+0,0039(120-20)]} * 1 = 1,75 \quad (6)$$

Die Verlustleistung steigt trotz einer Verdoppelung des Drehschubes $\tau$ nur um etwa 75% an.

In einem weiteren Vergleich soll nun eine Maschine 3 so ausgelegt werden, dass ebenfalls eine Verdoppelung des Drehschubes $\tau$ erreicht wird. Dabei soll das Drehmoment der Maschine 1 erhalten bleiben, die Länge des Blechpaketes aber halbiert werden. Da die Verluste von der Leiterlänge $L_{L3}=L_{P3}+L_{W3}$ abhängen, muss für die Wickelkopflänge $L_{W3}$ eine allgemeine Festlegung gemacht werden:

$$L_L = L_P + L_W = L_P + \frac{D\pi}{2p}x \quad (7)$$

mit x = 2,2 bis 3,0 Verhältnis der Polteilung $\frac{D\pi}{2p}$ mit p= Polpaarzahl.

Das Verhältnis der Wickelkopflängen ist $\dfrac{L_{W3}}{L_{W1}} = \dfrac{x_3\dfrac{D_3\pi}{2p_3}}{x_1\dfrac{D_1\pi}{2p_1}} = \dfrac{x_3D_3p_1}{x_1D_1p_1}$ $\quad (8)$

$L_{W3}$ wird eingesetzt in das Verhältnis der Leiterlängen

$$\frac{L_{L3}}{L_{L1}} = \frac{L_{P3} + L_{W3}}{L_{P1} + L_{W1}} = \frac{L_{P3} + \frac{x_3 D_3 p_1}{x_1 D_1 p_3} L_{W1}}{L_{P1} + L_{W1}} = \frac{\frac{L_{P3}}{L_{P1}} + \frac{x_3 D_3 p_1}{x_1 D_1 p_3} \frac{L_{W1}}{L_{P1}}}{1 + \frac{L_{W1}}{L_{P1}}} \qquad (9)$$

so dass mit den Vorgaben für die Maschine 3

$$L_{P3} = 0,5\, L_{P1}$$

$$x_3 = x_1$$

$$D_3 = D_1$$

$$p_3 = p_1$$

und $L_{W1}/L_{P1} = 0.55$ bei einem scheibenförmigen Generator folgende Leiterlänge $L_{L3}$ nach Gleichung (9) bestimmt werden kann:

$$\frac{L_{L3}}{L_{L1}} = \frac{0,5 + 0,55}{1 + 0,55} = 0,677$$

Mit den restlichen Vorgaben für die Maschine 3

$$M_3 = M_1$$

$$B_3 = 1,12\, B_1$$

$$A_{L3} = A_{L1}/1,05$$

$$T_3 = -50°C$$

$$T_1 = 120°C$$

lassen sich mit Hilfe der Gleichung (4) die Verluste wie im vorangegangenen Beispiel bestimmen:

$$\frac{P_{V3}}{P_{V1}} = 1 * 1 * \left(\frac{1}{1,12}\right)^2 * 2^2 * 1,05 * 1 * 1 * 0,677 \frac{[1 + 0,0039(-50 - 20)]}{[1 + 0,0039(120 - 20)]} * 1 = 1,1856$$

Das heißt, dass mit Hilfe einer effektiveren Kühlung der stromführenden Leiter eine erhebliche Steigerung der Leistungsdichte erreichbar ist, in diesem Fall wird sie verdoppelt und die Verlustleistung erhöht sich lediglich um 18,56%.

Für den Fachmann sind diese Zusammenhänge im Allgemeinen bekannt. Dass eine direkte Leiterkühlung bei elektrischen Maschinen in dem hier angesprochenen Leistungsbereich nicht zum Einsatz kommt, liegt an dem unverhältnismäßig hohen Aufwand, der z. B. bei Wasserkühlung in Hohlleitern erforderlich ist. Erst der erfindungsgemäße Einsatz eines verdampfenden Kältemittels wie z. B. Kohlendioxid mit seinen hervorragenden Wärmeübertragungseigenschaften macht eine Abkühlung der Leiter auf entsprechend tiefe Temperaturen möglich. Der höhere Energieaufwand für eine zusätzliche Kältemaschine kann sinnvoll sein, wenn eine erhebliche Steigerung des Drchschubs oder der Energiedichte im Vordergrund steht.

Beispielsweise bei direktangetriebenen Generatoren großer Windenergieanlagen wird ein sehr großes Drehmoment im Bereich von 1.000 bis 10.000 kNm erforderlich. Obwohl bei Windkraftwerken sehr hohe Anforderungen an den Wirkungsgrad gestellt werden, ist eine Steigerung der Leistungsdichte aus Kostengründen dringend erwünscht. Die damit verbundene Wirkungsgradeinbußen im Volllastbereich sind aber leicht hinnehmbar, da Windenergicanlagen sehr selten im Volllastbetrieb laufen.

Weitere Einzelheiten, Merkmale und Vorteile der Erfindung ergeben sich aus der nachfolgenden Beschreibung von Ausführungsbeispielen mit Bezugnahme auf die dazugehörigen Zeichnumgen.

Es zeigen:

Fig 1:     einen Schnitt durch den Ständer einer elektrischen Maschine senkrecht zur Maschinenachse
Fig 2:     Wicklungsstäbc als Hohlleiter und Voilleiter
Fig 3:     Spulen einer Ständerwicklung, die an einen Kühlkreislauf angeschlossen sind
Fig 4:     ein vereinfachtes Schaltbild einer dreiphasigen Wicklung und ein Fließbild eines Kühlkreislaufes, der an eine Kältemaschine angeschlossen ist.
Fig 5:     ein Schaltbild der Ständerwicklung und ein Fließbild für das Kühlsystem
Fig 6:     eine Übersicht der Kühlkreisläufe
Fig 7:     Kühlkreislauf mit direkter Wänneabgabe an die Umgebung
Fig 8:     Kühlkreislauf mit Kältemaschinen und Umwälzpumpe
Fig 9:     Kühlkreislauf mit Kältemaschinen ohne Umwälzpumpe
Fig 10:     Kühlkreislauf mit getrenntem Kältekreislauf
Fig 11:     Kombination von Kühlkreisläufen
Fig 12:     Kühlkreislauf mit Absorptionskältemaschine
Fig 13:     Allgemeine Darstellung des Kühlkreislaufes im Druck-Enthaspic- Diagramm
Fig 14:     Darstellung von drei Kühlkreisläufen davon einer im überkritischen Bereich
Fig 15:     Tabelle Kühlkanäle
Fig 16:     Wirkungsgradvergleich

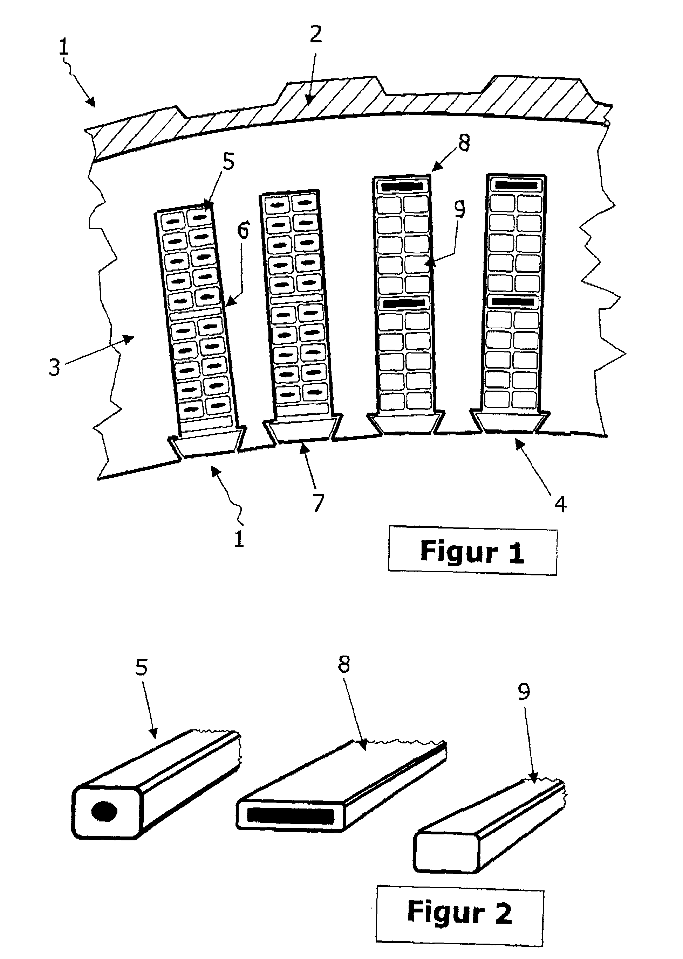

In Figur 1 ist eine Schnittdarstellung eines Ständers 1 einer elektrischen Maschine in der Bauform für innen angeordnetem Läufer zu sehen. Im Ständergehäuse 2 ist ein Blechpaket 3 eingesetzt, das durch Aufeinanderstapeln von Blechsegmenten oder Ronden entsteht, wobei in den Blechen Nuten 4 ausgestanzt werden. In den Nuten 4 sind Formspulen 10 eingelegt, die aus einzelnen Stäben oder einer Spule mit aufgewickelten Stäben bestehen und von einem Nutverschlusskeil 7 gehalten werden.

Bei hochbelasteten Maschinen werden Hohlprofile 5 entsprechend Figur 2 verwendet, die im Inneren mit einer Kühlflüssigkeit z. B. Wasser oder einem Kühlgas z. B. Wasserstoff durchströmt werden, wodurch die durch Kupfer- und Wirbelstromverluste entstandene Wärme abgeführt wird. Auch die Kombination von Vollprofilen 9 und Hohlprofilen 8 mit Kühlkanal ist bekannt.

Die Erfindung besteht darin, dass zur Kühlung verdampfendes oder überkritisches Kältemittel, z. B. $CO_2$ durch die Kühlkanäle geleitet wird, so dass eine wesentlich größerc Wärmemenge bci geringfügigen Temperaturänderungen abgeführt werden kann. Dabei haben die Kühlkanäle der Hohlleiter 5 extrem kleine Kanalquerschnitte, so dass bei gleicher Nutgeometrie höhere Nutfüllfaktoren gegenüber einer einphasigen Kühlung mit Flüssigkeit oder Gas erreicht wird. Durch die größere Nutfüllung mit Kupfer und die niedrigere Leitertermperatur sinkt der Ohmsche Widerstand der Wicklung deutlich ab.

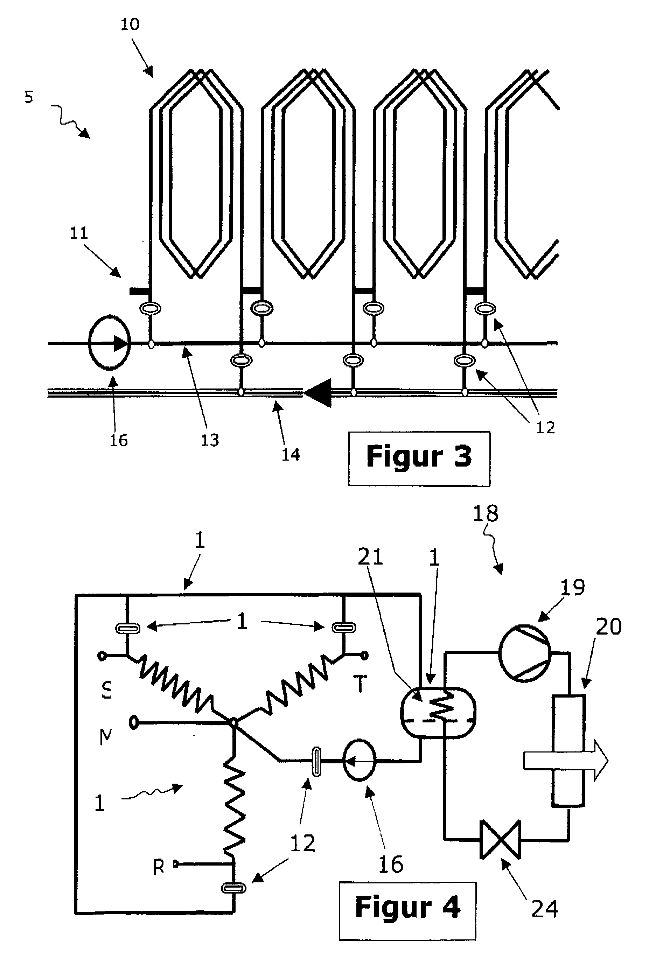

In Figur 3 sind Spulen 10 mit je 3 Windungen aus Hohlprofilen 5 dargestellt, die durch Schaltverbindungen 11 elektrisch in Reihe geschaltet sind. Durch Anschlusselemente 12 sind die Spulen parallel an den Kühlkreislauf angeschlossen, von dem hier die Umwälzpumpe 16, die Kühlmittelzuführleitung 13 und die Kühlmittclrückführleitung 14 zu schen sind. Die Anschlusselemente 12 sind aus elektrisch isolierendem Werkstoff hergestellt und stellen eine Potentialtrennung zwischen den Spulen und den Kühlmittelleitungen dar.

Ein vereinfachtes Schaltbild der Ständerwicklung in Sternschaltung ist in Figur 4 zu sehen mit den Anschlussklemmen R, S, T und der Klemme M für den Stempunkt M. Gleichzeitig ist ein vereinfachtes Fließbild des Kühlsystems dargestellt, das für eine zweiphasige Kühlung mit $CO_2$ verwendet werden kann. Das flüssige $CO_2$ wird mittels einer

Umwälzpumpe 16 über die Kühlmittclzuführleitung 13 zum Stempunkt des Wicklungssystems geführt und von dort durch das Spulensystem 15 zur Kühlmittelrückführleitung 14 gepumpt, die das weitgehend verdampfte oder überhitzte, gasförmige oder auch überkritische $CO_2$ zu einem Sammelbehälter 17 leitet, in dem gasförmiges und flüssiges $CO_2$ getrennt werden. In dem Fall, dass die Wicklungstemperatur unter die Umgebungstemperatur abgekühlt werden soll, ist eine Kältemaschine 18 vorgesehen, die in bekannter Weise dem $CO_2$ über einen Wärmeübertrager 21 mittels Kompressor 19, Kondensator 20 und Drossel 24 die Wärme wieder entzieht.

Die isolierenden Anschlusselemente 12 sorgen für eine Potentialtrennung zwischen äußerem Kältekreislauf und dem zu kühlenden hier gezeigten Drehstromwicklungssystem 15.

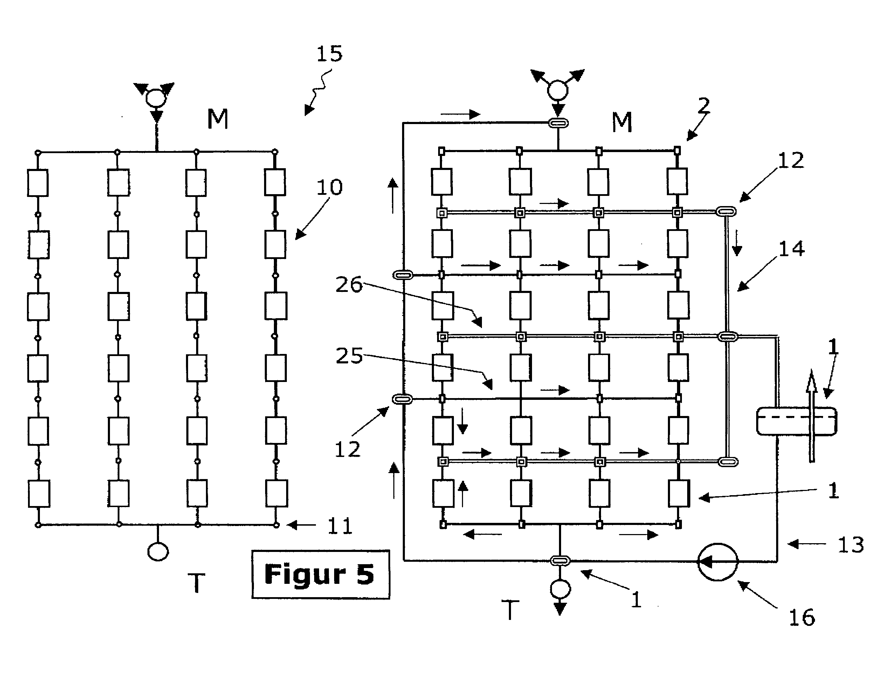

Im linken Teil der Figur 5 ist die elektrische Schaltanordnung eines Teils der Drehstromwicklung 15 in aufgelöster Form dargestellt. Es sind vier parallele Gruppen mit je sechs in Reihe geschalteten Spulen 10 als Beispiel erkennbar, wobei die Spulen an den Stellen 11 elektrisch leitend miteinander verbunden sind.

In der rechten Hälfte der Figur 5 ist das Fließbild für eine vorteilhafte Führung der Kühlmittelströme in diesem Wicklungssystem aufgezeigt. Die elektrisch parallel zucinander angeordneten Spulen 10 haben das gleiche Spannungsniveau und können daher auch über die Kühlmittelverbindungsleitungen 25 und 26 untereinander ohne Potentialtrennung durch nicht isolierte Anschlusselemente 27 verbunden werden. Der Anschluss an die Kühlmittelzu- und Rückführleitung 13 und 14 erfolgt dann über nur noch wenige isolierte Anschlusselemente 12. Im Sammelbehälter 17 wird das weitgehend gasförmige Kältemittel über Wärmeübertrager abgekühlt, kondensiert und über eine Umwälzpumpe 16 durch die Kühlmittelzuführleitung 13 wieder in das Wicklungssystem 15 gefördert.

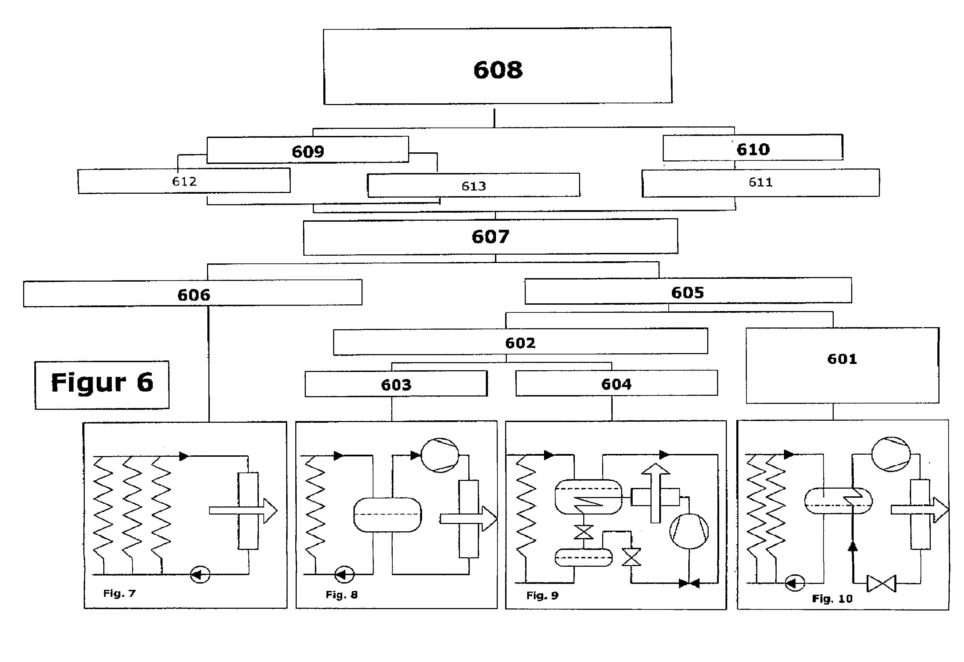

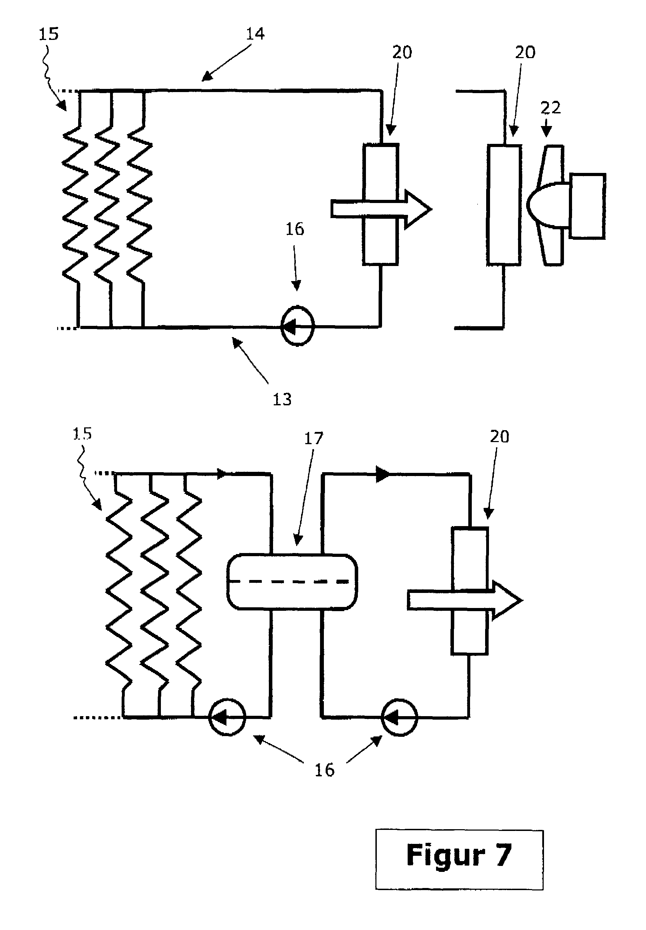

Die Erfindung ist nicht auf die Ausführungen der Kühlmittclkreisläufe entsprechend den Figuren 4 und 5 beschränkt. Vielmehr sind noch andere Kreisläufe möglich, die ohne Anspruch auf Vollständigkeit schematisch in der Figur 6 zusammengestellt sind.

Das flüssige Kühlmittel, insbesondere $CO_2$, kann je nach Druckniveau unterkritisch teilweise oder vollständig verdampfen oder auch überhitzt aus dem Wicklungssystem austreten. Bei einem Druckniveau oberhalb des kritischen Druckes ist der Endzustand ohnehin einphasig.

Die Abfuhr der Verlustwärme aus dem Wicklungssystem 15 an die Umgebung erfolgt entweder direkt über einen Wärmeübertrager 20 oder indirekt über eine Kältemaschine 18, die den Kühlmitteldampf kondensiert. In der Figur 6 sind auch drei Beispiele für Kältekreisläufe dargestellt, die in den Figuren 8 bis 10 näher erläutert werden. Die Kältekreisläufe sind in der Lage, das kondensierte Kühlmittel unter die Umgebungstemperatur abzukühlen und so die Wicklungswiderstände gegenüber dem Stand der Technik wesentlich zu reduzieren. In der Folge ist eine Erhöhung der Leistungsdichte möglich.

Die in der Figur 6 mit Ziffern versehenen Funktionsblöcke dienen der Erläuterung der technischen Funktion der dargestellten Ausführungsbeispiele der Figuren 7 bis 10.

Der Funktionsblock 6 bezeichnet die Funktionsweise eines getrennten Kältekreislaufs mit einem beliebigen Kältemittel.

Der Funktionsblock 602 stellt dar, dass ein Verdichter vorhanden ist, der Kühlmitteldampf ansaugt. Bei dem Funktionsblock $6\beta3$ erfolgt dies mit einer Umwälzpumpe und bei dem Funktionsblock 604 erfolgt dies ohne Umwälzpumpe.

Bei dem Funktionsblock 607 wird die Wärmeabfuhr an die Umgebung entsprechend den weiteren Funktionsblöcken 605 und 606 unterschieden.

Entsprechend dem Funktionsblock 605 ist den Ausführungsbeispielen der Figuren 8 bis 10 gemeinsam, dass eine Kältemaschine vorhanden ist.

Der Funktionsblock 606 bedeutet, dass die Wärmeabfuhr direkt an die Umgebung erfolgt.

Entsprechend dem Funktionsblock 608 wird als Kühlmittel CO2 verwendet.

Dessen Zustand kann entsprechend Funktionsblock 609 unterkritisch oder entsprechend Funktionsblock 610 überkritisch sein.

Bei dem Funktionsblock 610 ist entsprechend dem Funktionsblock 611 dargestellt, dass der Endzustand einphasig ist.

Bei dem Funktionsblock 609 wird nochmals unterschieden, dass der Endzustand zweiphasig sein kann (Funktionsblock 612) oder überhitzt (Funktionsblock 613).

In Figur 7 erfolgt die Abfuhr der Verlustwärme aus dem Wicklungssystem 15 über einen Wärmeübertrager 20 direkt an die Umgebung, indem das zweiphasige oder überhitzte Kühlmittel kondensiert wird. Liegen die Außentemperaturen oberhalb von etwa 25 °C vor, so ist das Fluid überkritisch und wird im Wärmeübertrager 20 von der Umgebungsluft abgekühlt. Die Umwälzpumpe 16 fördert das Kühlmittel wieder durch die Kühlmittelrückführleitung 13 in das Wicklungssystem 15. Der Wärmeübertrager 20 kann zum Beispiel ein $CO_2$-Luft-Wärmetauscher sein, der durch den Lüfter 22 mit Umgebungsluft beaufschlagt wird.

Die Umwälzpumpe 16 ist bei unterschiedlich großen abzuführenden Wärmemengen vorzugsweise drehzahlgeregelt, um die jeweils erforderliche Kühlmittelmenge zur Verdampfung im Wicklungssystem 15 zur Verfügung zu stellen und die Durchflusswiderstände überwinden zu können.

Bei dieser Anordnung lässt sich das Wicklungssystem je nach der Grädigkeit des Wärmeübertragers 20 auf ein Temperaturniveau knapp über dem der Umgebung halten, was in bezug auf Wärmedehnungcn des Wicklungssystems und dessen Lebensdauer sehr vorteilhaft sein kann.

Im unteren Teil der Figur 7 ist ein Sammelbehälter 17 vorgesehen, der dem Druckausgleich und der Phasenseparation dient. Dabei sind die Kreisläufe zur Kühlung der Wicklung 15 und zur Kondensation des Kühlmittels im Kondensator 20 getrennt ausgeführt und mit je einer Umwälzpumpe 16 auch getrennt betreibbar.

In <u>Figur 8</u> ist ein einfaches Kühlsystem mit einer Kältemaschine 18 dargestellt, in dem das Kühlmittel, das im Wicklungssystem 15 verwendet wird, auch in der Kältemaschine eingesetzt wird. Ein Sammelbehälter 17 verbindet beide Kreisläufe und dient als Abscheider, der die flüssige von der gasförmigen Phase trennt. Ein Kompressor 19 saugt das gasförmige Kühlmittel an, verdichtet und fördert es in einen Wärmeübertrager 20, wo es die Wärme an die Umgebung abgibt. Nach der Entspannung in der Drossel 24 wird das unter die Umgebungstemperatur abgekÜhlte Fluid dem Sammelbehälter 17 zugeführt, aus dem es mit der Umwälzpumpe 16 in das Wicklungssystem 15 gepumpt wird.

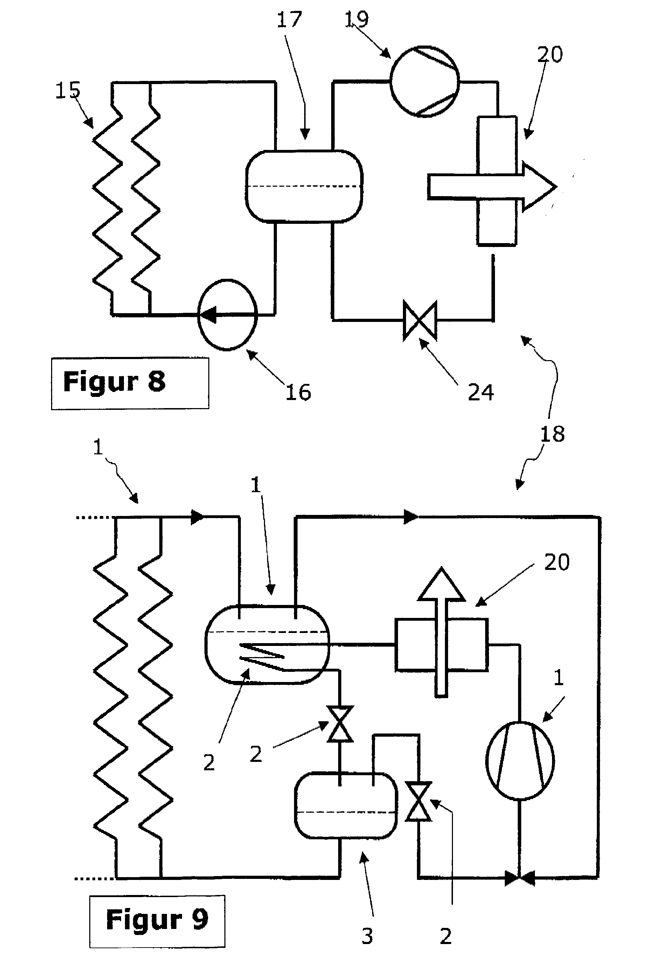

<u>Figur 9</u> zeigt ein weiteres Kühlsystem mit einer Kältemaschine 18, die ebenfalls mit dem Kühlmittel aus der Wicklung 15 betrieben wird. Im Vergleich zum Kühlsystem in Figur 8 entfällt hier die Umwälzpumpe. Das dampfförmige Kühlmittel wird vom Kompressor 19 aus dem Sammelbehälter 17 angesaugt und komprimiert. Das komprimierte Kühlmittel wird im Kondensator 20 von der Umgebungsluft kondensiert und in einem zusätzlichen Wärmeübertrager 23 unterkühlt. Mittels dieses Wärmeübertragers 23, der im Sammelbehälter 17 angeordnet ist, verdampft etwaiges von den Kühlkanälen des Wicklungssystems 15 zurückkommendes flüssiges Kühlmittel.

Das unterkühlte Kondensat wird mittels einer Drossel 24 entspannt und in einem Abscheider 31 vom dampfförmigen Kühlmittel getrennt, das zur Saugseite des Kompressors gedrosselt wird. Die abgeschiedene Kühlflüssigkeit fließt wieder zu den Kühlkanälen im Wicklungssystem 15.

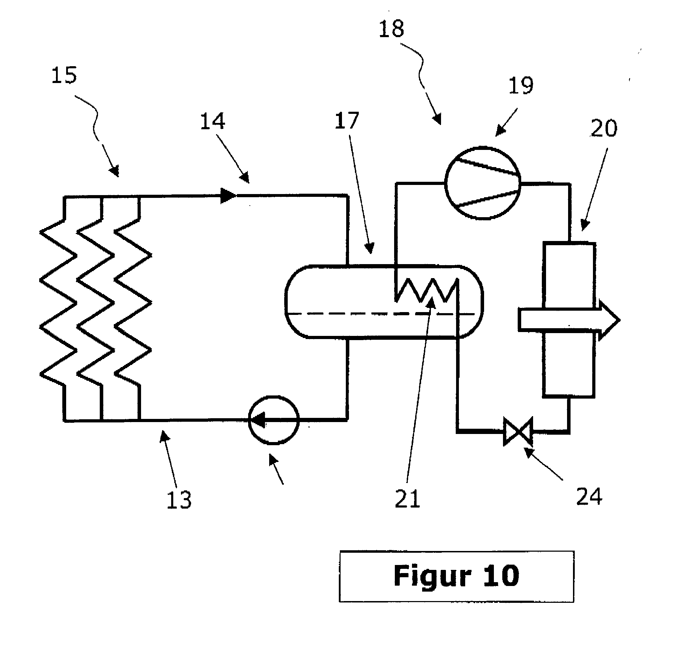

In <u>Figur 10</u> ist ein weiteres Kühlsystem dargestellt, bei dem das Kühlmittel aus der Wicklung 15 ebenfalls im Sammelbehälter 17 aufgenommen und nach Phasen getrennt wird. Hier erfolgt die Kondensation des gasförmigen Kühlmittels durch Wärmeübertragung am Verdampfer 21 des getrennten Kältekreislaufs, der in bekannter Weise mit einem. Kompressor 19, einem Kondensator 20 und einer Drossel 24 ausgestattet ist. Der Vorteil dieses Kühlsystems besteht darin, dass der Kältckreislauf mit einem beliebigen, geeigneten Kältemittel betrieben werden kann.

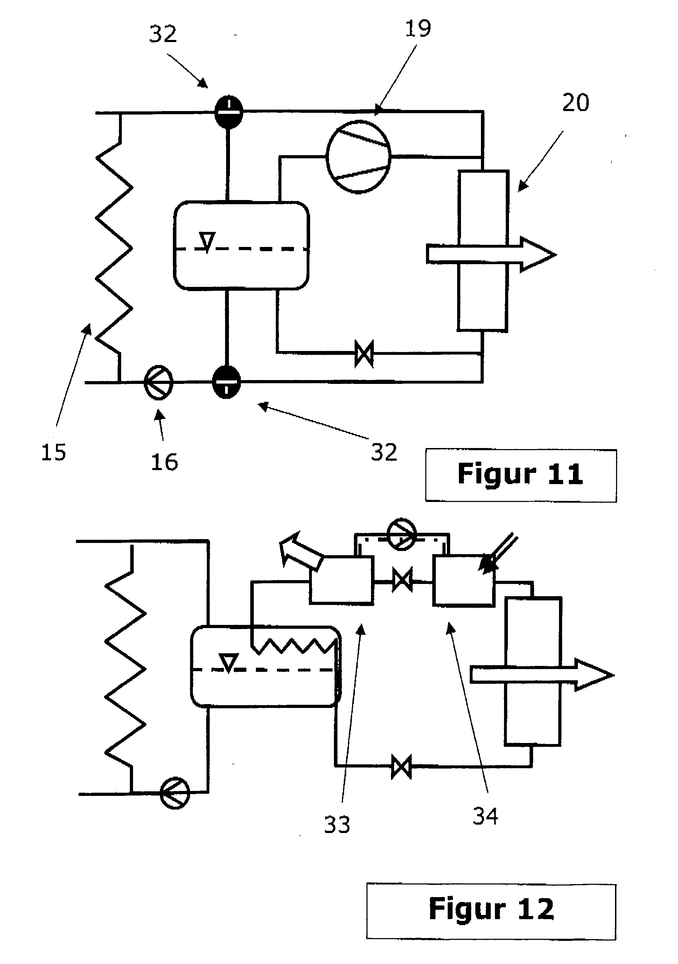

<u>Figur 11</u> zeigt eine Kombination der Kühlsysteme nach den Figuren 7 und 8. Damit lässt sich das Kühlmittel bei geringer Generatorlast oder niedrigen Außentemperaturen, z. B. im Winter, direkt mit Umgebungsluft kühlen, wenn die Ventile 32 dabei in der gezeichneten Position stehen und der Kompressor 19 nicht angetrieben wird. Umgekchrt kann das Kühlmittel bei hohen Außentemperaturen, z. B. im Sommer mit der Kältemaschine auch unter die Umgebungstemperatur abgekühlt werden.

Es sind weitere Kombinationen möglich, welche die erfindungsgemäße Aufgabe erfüllen, das Kühlmittel in den Wicklungssystemen elektrischer Maschinen auf jedes gewünschte und sinnvolle Temperaturniveau einzustellen und auch großen Verlustwärmemengen dort auf das Kühlmittel zu übertragen, wo sie hauptsächlich entstehen, nämlich in den stromführenden Leitern.

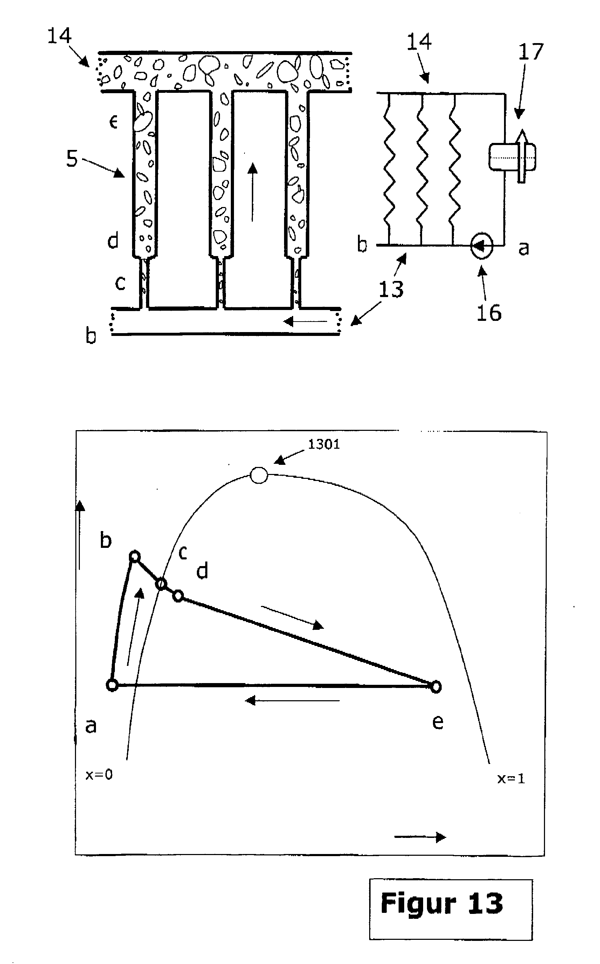

Steht Wärme auf geeignetem Temperaturniveau von 150 bis 180 °C als Antriebsenergie zur Verfügung, so kann auch eine Absorptionskältcmaschine nach <u>Figur 12</u> zur Kühlung verwendet werden. Dabei wird der Verdichter in bekannter Weise ersetzt durch Absorber 33 und Austreiber 34 mit einer Pumpe zur Förderung der reichen Lösung vom Absorber zum Austreiber und einer Drossel zur Rückführung der armen Lösung vom Austreiber zum Absorber. Dem Austreiber wird

Antriebswärme auf geeignetem Temperaturniveau zugeführt, aus dem Absorber muss zusätzliche Wärme an die Umgebung abgeführt werden.

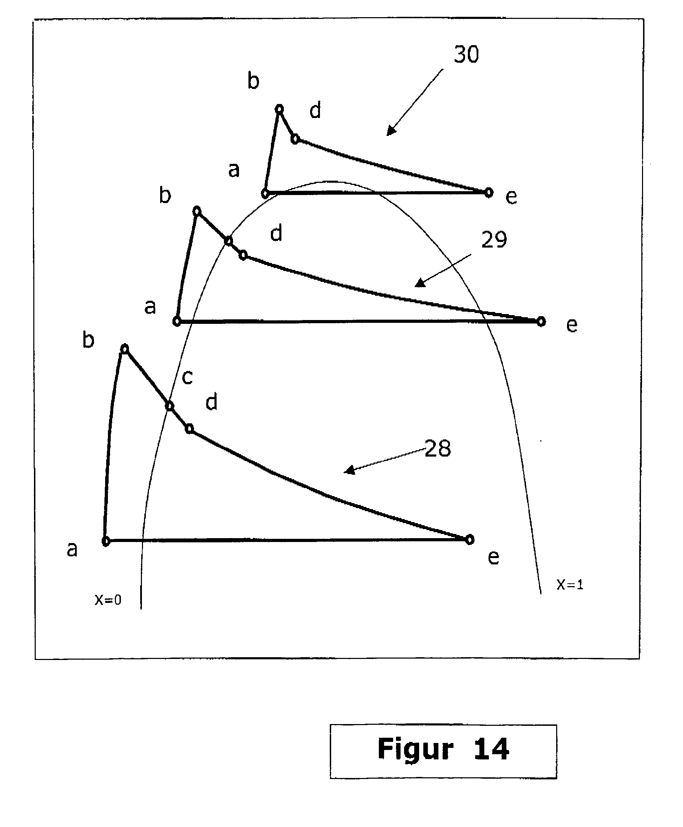

In <u>Figur 13</u> ist ein Anlagenschema für den geschlossenen Kühlkreislauf zur Kühlung einer elektrischen Maschine mit einem verdampfenden Kühlmittel allgemcin dargestellt.

Insbesondere soll $CO_2$ als Kältemittel verwendet werden, da es aus ökologischer und sichcrheitstechnischer Sicht ein nahezu ideales Kältemittel ist. Es ist weder giftig noch brennbar, es besitzt kein Ozonabbaupotential wie viele andere Kühlmittel, ist chemisch inaktiv und ausgesprochen billig. Daher gibt es keine Notwendigkeit zur Rückgewinnung oder Entsorgung.

Nachteilig für den Einsatz sind die erforderlichen hohen Drücke. Letztlich können die Kühlsysteme aber kompakter und mit geringeren Kanalquerschnitten ausgeführt werden, was bei Hohlleitern in elektrischen Maschinen zu kompakten Spulen mit hohem Nutfüllfaktor führt.

In der oberen rechten Hälfte von Figur 13 ist das Anlagenschema vereinfacht und links in einem Ausschnitt dargestellt. Der Kühlkanal innerhalb eines Hohlleiters 5 ist an die Kühlmittelzuführlcitung 13 über eine Einlaufstrecke mit geringerem Kanalquerschnitt angeschlossen. Diese vorteilhafte Weiterentwicklung der Erfindung sichert die gleichmäßige Verteilung des Kältemittels auf die große Zahl paralleler Kühlkanäle.

In der unteren Hälfte der Figur 13 ist der zweiphasige Kühlkreislauf in einem Druck-Enthalpie-Diagramm dargestellt. Der Druck ist auf der Ordinate in bar aufgetragen, die Enthalpie auf der Abszisse in kJ/kg. Der Arbeitspunkt a entspricht dem Zustand des flüssigen Kältemittels $CO_2$ im Sammelbehälter 17 und in der Kühlmittclzuführlcitung 13 bis zur Umwälzpumpe 16, die den Druck adiabat bis zum Zustand b erhöht. Im Einlaufkanal entspannt sich die unterkühlte Flüssigkeit, nimmt Wärme auf und erreicht den Siedepunkt bei Zustand c und mit der ersten Dampfbildung den Arbeitspunkt d, wo der größere Querschnitt des Kühlkanals beginnt. Dort tritt das Kühlmittel bereits mit einem gewissen Dampfgehalt in den Hauptkühlkanal ein und nimmt durch Verdampfung Wärme auf. Durch Strömungswiderstände sinkt der Druck bei leicht abfallender Temperatur, bis der Zustand e mit beispielsweise 95 % Dampfgehalt erreicht ist.

Durch Kühlung wird das dampfförmige $CO_2$ kondensiert und im Sammelbehälter 17 aufgefangen. (Zustand a)

Die erfindungsgemäße Verwendung von $CO_2$ oder anderer Kühlmittel mit Phasenwechsel bzw. sehr hoher spezifischer Wärmekapazität führt zu geringen Massenströmen des Kühlmittels. Es entstehen wiederum vergleichsweise geringe Druckabfälle bei leicht sinkenden Temperaturen. Dadurch können kleinere Kühlkanalquerschnitte verwendet werden als dies zum Beispiel mit Wasser möglich wäre. Da das verdampfende $CO_2$ eine hohe Wärmeübergangszahl aufweist, wirkt sich die Verkleinerung der Wärmeübertragungsfläche nicht aus.

Auch bei überkritischen Zuständen, die im Kühlsystem dann zwangsläufig auftreten, wenn sich die niedrigste im Kühlkreislauf vorkommende Temperatur der kritischen Temperatur des Kühlmittels annähert, ergeben sich ähnlich günstige Eigenschaften: hohe Wärmeübergangszahlen, geringe Massenströme und daraus resultierende geringe Druckabfälle bei nahezu konstanten oder leicht ansteigenden Temperaturen im Kühlkanal, (siehe auch Tabelle 1 in Figur 15)

Figur 14 zeigt in einem Druck-Enthalpie-Diagramm beispielhaft drei unterschiedliche Prozesse:

28    bei niedrigen Kühlmitteltemperaturen in den Leitern
29    bei mittleren und
30    bei hohen Leiteriemperaturen, wobei auch überkritische Prozesse ganz oberhalb des kritischen Drucks möglich sind

In Figur 14 ist wiederum auf der Ordinate der Druck in bar aufgetragen und auf der Abszisse die Enthalpie in kJ/kg.

Die nachfolgende Tabelle enthält berechnete Werte für einen Kühlkanal mit einem Kanaldurchmesser, von $D_K$ =3mm, mit einer Länge von insgesamt $L_K$=35,2m und mit einer Einlaufstrecke von $L_0$=3m mit einem Kanaldurchmesser $D_0$=2mm, der eine Verlustleistung von Q =1,11kW abführt, was einer Wärmestromdichte im Hauptkühlkanal von q = 3,35 kW/m$^2$ entspricht.

Die entsprechenden Größen, die mit den genannten Maßen der Berechnung zu Grunde gelegt sind, sind in Figur 15 eingezeichnet.

Man erkennt, dass bei Kühlmitteleintrittstcmperaturen in einem Bereich von $L_m$= -31,5°C bis +30°C hohe Wärmeübergangszahlen $\alpha$ bis 19700 W/m$^2$K erreicht werden bei mittleren Drücken von 10,1 bis 80,9 bar und mit einem $CO_2$ Massestrom m zwischen 3,4 und 11,1 g/s_

| Eintritts-temperatur | Austritts-temperatur | Mittl. Druck Kühlkanal | Druck-differenz | Masse-strom | Austritts-geschwind. | Wärmeüber gangszahl |
|---|---|---|---|---|---|---|
| $t_{ein}$ °C | $t_{aus}$ °C | $p_m$ bar | $\Delta p$ bar | m g/s | w m/s | alpha kW/m$^2$K |
| -31,5 | -51 | 10,1 | 7,2 | 3,4 | 17,6 | 10,4 |
| -24,6 | -37 | 14,3 | 5,8 | 3,6 | 13,2 | 9,8 |
| -11,6 | -18 | 23,1 | 4,7 | 4,1 | 9,2 | 9,3 |
| 2 | -2 | 34,9 | 4,1 | 4,8 | 6,6 | 8,6 |
| 13 | 8 | 45,0 | 4,3 | 5,6 | 5,6 | 9,0 |
| 22 | 18 | 57,2 | 5,4 | 7,2 | 5,1 | 10,4 |
| 27 | 22 | 64,3 | 7,4 | 9,1 | 5,2 | 13,1 |
| 30 | 33 | 80,9 | 10,9 | 11,1 | 5,9 | 19,7 |

In Figur 16 sind die Wirkungsgrade zweier elektrischer Maschinen A und B miteinander verglichen. Maschine A ist so ausgelegt, dass sie bei 100% Nennleistung, also bei Voillast den maximalen Wirkungsgrad $A_0$ hat.

Es ist der Wirkungsgrad in % über der Auslastung in % der Nennleistung aufgetragen.

Erfindungsgemäß ist die Maschine B, zum Beispiel ein Vielpol-Synchrongenerator für Windenergieanlagen, für hohen Drchschub ausgelegt, um Gewicht und Kosten zu reduzieren. Dadurch liegt der Wirkungsgrad $B_0$ bei Voillast niedriger als bei Maschine A. Wenn eine elektrische Maschine B, wie der genannte Generator für Windenergieanlagen überwiegend im Teillastbereich bei 20 bis 50 % der Nennleistung betrieben wird, so ist die Auslegung mit einem Wirkungsgradmaximum $B_1$ in diesem Bereich ein wichtiger technischer und ökonomischer Vorteil. Denn die Maschine B

hat in $B_1$ einen deutlich höheren Wirkungsgrad verglichen mit $A_1$-Außerdem ist sie leichter und kostengünstiger herzustellen.

Vorausselzung dabei ist, dass die deutlich höheren Verluste im Nennbetrieb mit dem hier vorgeschlagenen Kühlverfahren ohne Überhitzung der Wicklung abgeführt werden können.

Bezugszeichenliste:

1. Ständer
2. Gehäuse
3. Blechpaket
4. Nut
5. Hohlleiter
6. Zwischenlage
7. Nutverschlusskeil
8. Kühlrohr
9. Voilleiter
10. Spule
11. elektrische Schaltverbindung
12. Anschlusselement für Kühlsystem
13. Kühlmittelzuführleitung
14. Kühlmittelrückführleitung
15. dreiphasige Ständerwicklung
16. Umwälzpumpe
17. Sammelbehälter
18. Kühlaggregat
19. Kompressor
20. Kondensator
21. Verdampfer
22. Ventilator
23. Wärmeübertrager
24. Drossel
25. Kühlmittelverbindungsleitung im Zufluss
26. Kühlmitlelverbindungsleitung im Abfluss
27. Nicht isolierte Anschlusselemente
28. Kältemittelkreislauf bei tiefen Temperaturen
29. Kältemittelkreislauf bei mittleren Temperaturen
30. Kältemittelkreislauf bei höheren Temperaturen im p-h-Diagramm
31. Abscheider
32. Ventil
33. Absorber
34. Austreiber

**Patentansprüche**

1. Verfahren zur Kühlung der Wicklung (5, 9) elektrischer Maschinen durch ein Fluid, das direkt durch Kühlkanäle (5, 8) in den elektrischen Leitern der Wicklung (5) oder indirekt in Kanälen (8) geführt wird, die in engem Wärmekontakt mit den elektrischen Leitern (9) stehen, wobei das Fluid ein Kältemittel, insbesondere $CO_2$ ist, das durch Wärmeaufnahme mit Phasenwechsel bzw. oberhalb des kritischen Punktes mit hoher Enthalpiedifferenz bei kleiner Temperaturerhöhung den Abtransport der Verlustwärme der elektrischen Maschine übernimmt.

2. Verfahren nach Anspruch 1,
   **dadurch gekennzeichnet, dass** das Fluid in einem geschlossenen und druckdichten Kreislauf umgepumpt wird.

3. Verfahren nach den Ansprüchen 1 oder 2,
   **dadurch gekennzeichnet, dass** das Fluid die Verlustwärme in den Kühlkanälen durch Verdampfung zweiphasig oder überkritisch einphasig bei nahezu konstanter Leitertemperatur aufnimmt und entweder in einem Wärmeübertrager direkt an die Umgebung (Figur 7) oder indirekt an einen Kühlkreislauf mit einer Kompressor- oder Absorptionskältemaschine abgibt, die das Fluid unter die Umgebungstemperatur abkühlt und kondensiert (Figur 10).

4.  Verfahren nach den Ansprüchen 1 oder 2,
    **dadurch gekennzeichnet, dass** das flüssige Fluid in die Kühlkanäle der Wicklung gepumpt und durch die Aufnahme der Verlustwärme teilweise oder auch weitgehend verdampft oder überhitzt wird, dann in einen Abscheider gelangt, in dem die Phasen getrennt werden, wobei das dampfförmige Fluid dann im Kompressor einer Kältemaschine komprimiert wird und durch Abgabe der Wärme an die Umgebung kondensiert (Figur 8).

5.  Verfahren nach den Ansprüchen 1 bis 4,
    **dadurch gekennzeichnet, dass** die Förderung des Kühlmittels vom Kältekreislauf mit übernommen wird, wobei flüssiges Kühlmittel, welches von den Kühlkanälen zurückkommt, in einem Wärmeübertrager vom Kondensat des Kältekreislaufes verdampft wird, so dass nur dampfförmiges Kältemittel vom Kompressor des Kältekreislaufes angesaugt wird (Figur 9).

6.  Verfahren nach einem der vorangegangenen Ansprüche,
    **dadurch gekennzeichnet, dass** das Kühlmittel die Verlustwärme über einen Wärmetauscher direkt an die Umgebung abgibt (Figur 11) oder dass das Kühlmittel mit einer Kältemaschine unter die Umgebungstemperatur gekühlt wird.

7.  Verfahren nach einem der vorangegangenen Ansprüche,
    **dadurch gekennzeichnet, dass** die Temperaturen der Leiter des Ständers und des Läufers an die Umgebungstemperaturen angepasst werden.

8.  Verfahren nach Anspruch 7,
    **dadurch gekennzeichnet, dass** die Temperatur von Ständer und Läufer auf einen einstellbaren festen Abstand oberhalb oder unterhalb der Umgebungstemperatur geregelt wird.

9.  Verfahren nach einem der vorangegangenen Ansprüche,
    **dadurch gekennzeichnet, dass** durch Erhöhung der Leistungsdichte das Optimum des Wirkungsgrades einer elektrischen Maschine in ein der jeweiligen Nutzungshäufigkeit angepasstes Teillastgebiet verlegt wird (Figur 16).

10. Verfahren nach einem der vorangegangenen Ansprüche,
    **dadurch gekennzeichnet, dass** bei parallel angeordneten Kühlkanälen die Kühlkanäle mit einer Einlaufstrecke versehen sind, die einen kleineren Kanalquerschnitt aufweist.

**Figur 1**

**Figur 2**

**Figur 3**

**Figur 4**

**Figur 5**

EP 1 852 956 A1

**Figur 6**

**Figur 7**

**Figur 8**

**Figur 9**

15  14  17  18  19  20

13  21  24

**Figur 10**

32    19    20

15    16    32

**Figur 11**

33    34

**Figur 12**

**Figur 13**

**Figur 14**

**Figur 15**

**Figur 16**

**Europäisches Patentamt**

**EUROPÄISCHER RECHERCHENBERICHT**

**Nummer der Anmeldung**

EP 06 00 9309

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CH 310 332 A (METROPOLITAN-VICKERS ELECTRICAL COMPANY LIMITED) 15. Oktober 1955 (1955-10-15) * Seite 1, Zeile 1 - Zeile 37 * * Seite 3, Zeile 82 - Seite 4, Zeile 29; Abbildungen 1-8 * | 1-10 | INV. H02K3/24 |
| X | DE 75 21 286 U (BBC AG BROWN, BOVERI & CIE, BADEN) 10. Juni 1976 (1976-06-10) * Seite 8, Absatz 2 - Seite 13, Absatz 2; Abbildung 1 * | 1,2,6,7 | |
| X | DE 28 51 569 A1 (LICENTIA PATENT-VERWALTUNGS-GMBH) 12. Juni 1980 (1980-06-12) * Seite 3, Absatz 2 - Seite 6, Absatz 2; Abbildungen 1-3 * | 1,2,6,7 | |
| X | CH 324 315 A (METROPOLITAN-VICKERS ELECTRICAL COMPANY LIMITED) 15. September 1957 (1957-09-15) * Seite 1, Zeile 1 - Zeile 50; Abbildungen 1-4 * | 1,2,6,7 | RECHERCHIERTE SACHGEBIETE (IPC) H02K |
| A | EP 1 585 212 A (SIEMENS AKTIENGESELLSCHAFT) 12. Oktober 2005 (2005-10-12) * Spalte 5, Zeilen 8-11 * * Zusammenfassung; Abbildung 1 * | 1 | |

Der vorliegende Recherchenbericht wurde für alle Patentansprüche erstellt

| Recherchenort | Abschlußdatum der Recherche | Prüfer |
|---|---|---|
| München | 16. August 2006 | Kampka, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 00 9309

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-08-2006

| Im Recherchenbericht angeführtes Patentdokument | | Datum der Veröffentlichung | Mitglied(er) der Patentfamilie | | Datum der Veröffentlichung |
|---|---|---|---|---|---|
| CH 310332 | A | 15-10-1955 | BE<br>DE | 516189 A<br>1014640 B | <br>29-08-1957 |
| DE 7521286 | U | 10-06-1976 | CH<br>DE<br>FR | 589381 A5<br>2529914 A1<br>2278188 A1 | 30-06-1977<br>29-01-1976<br>06-02-1976 |
| DE 2851569 | A1 | 12-06-1980 | KEINE | | |
| CH 324315 | A | 15-09-1957 | KEINE | | |
| EP 1585212 | A | 12-10-2005 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10253699 A1
- DE 19621058 A1
- DE 10244202 A1
- DE 60009170 T2
- DE 19731852 A1